# EUROPÄISCHE PATENTSCHRIFT

(11) **EP 4 499 244 B1**
(45) Veröffentlichungstag und Bekanntmachung des Hinweises auf die Patenterteilung: **18.03.2026**
(21) Anmeldenummer: 22830462.2
(22) Anmeldetag: 05.12.2022
(51) Int. Cl.: A63B 57/00, A63B 69/36, A63B 71/06, A63C 19/06, G01C 15/02, G01C 15/00

(54) **VORRICHTUNG ZUM POSITIONIEREN UND AUSRICHTEN VON ABSCHLAGMARKIERUNGEN**
DEVICE FOR POSITIONING AND ORIENTING TEE-OFF MARKINGS
DISPOSITIF DE POSITIONNEMENT ET D'ORIENTATION DE MARQUAGES DE TERTRES DE DÉPART

(30) Priorität: 29.03.2022 DE 102022107352
(43) Veröffentlichungstag der Anmeldung: 05.02.2025
(73) Patentinhaber: Reichenpfader, Bernard, 5360 St. Wolfgang im Salzkammergut (AT)
(72) Erfinder: Reichenpfader, Bernard, 5360 St. Wolfgang im Salzkammergut (AT)
(86) Internationale Anmeldenummer: PCT/EP2022/084381
(87) Internationale Veröffentlichungsnummer: WO 2023/186342

(56) Entgegenhaltungen:
- WO-A1-2019/238924
- DE-A1- 102005 023 510

## Beschreibung

Die Erfindung betrifft eine Vorrichtung nach dem Oberbegriff des Anspruches 1.

Die im Folgenden diskutierte Erfindung betrifft eine Vorrichtung zum Anzeigen von Positionen von Abschlagmarkierungen auf einem Untergrund eines Golfplatzes. Im Folgenden wird die unter Anwendung der erfindungsgemäßen Vorrichtung angezeigte Position einer Abschlagmarkierung kurz als Markierungsposition bezeichnet.

Der Abschlagsbereich ist ein Bereich eines Golfplatzes, von welchem Bereich ein Golfspieler zu Beginn eines Lochs sein Spiel startet. Der Abschlagsbereich weist die Form eines Rechteckes mit zwei Schlägerlängen Tiefe auf, bei welchem Bereich die Vordergrenze durch die Linie zwischen den vordersten Punkten von zwei durch die Spielleitung gesetzten Abschlagmarkierungen definiert ist. Die Fläche ist definiert durch die Verlängerung der Linien von den äußersten Punkten der Abschlagmarkierungen um zwei Schlägerlängen nach hinten.

Eine Spielrichtung ist im Rahmen der Offenbarung der Erfindung als jene Richtung definiert, in welche Richtung der Spieler den Ball schlägt oder in welche Richtung der Spieler den Ball mit einer anzunehmenden Wahrscheinlichkeit schlägt oder schlagen will.

Die Recherche hat ergeben, dass aus DE102005203510A1 ein Gerät bekannt ist, dass das Platzieren von Abschlagmarkierungen auf Golfplätzen unterstützen soll. Dies wird dadurch erreicht, dass dieses Gerät in Spielrichtung ausgerichtet wird und durch Laser oder Stangen die Richtung, in der die Abschlagmarkierungen positioniert werden sollen, angezeigt wird. Laserstrahlen bzw. Stangen werden über dem Boden parallel zum Boden geführt, wodurch jedoch kein definierter Abstand zwischen den Abschlagmarkierungen angezeigt wird. Das ist nur mit teleskopierbaren oder abnehmbaren Stangen mit einer definierten Länge möglich. Da der Abstand zwischen den Abschlagmarkierungen üblicherweise ca. vier bis sechs Meter beträgt, ist das Gerät nur mit eingefahrenen teleskopierbaren oder abgenommenen Stangen sinnvoll zwischen den Abschlagbereichen transportierbar. Dies bedeutet, dass die Stangen für jeden Abschlag neu justiert werden müssten, was eine Ungenauigkeit mit sich bringt. Ein Ausrichten der Abschlagmarkierungen zu der Spielrichtung ist mit diesem Gerät nicht möglich. Das sind wohl die Gründe, warum dieses Gerät praktisch nicht zu Einsatz kommt.

Das in AT507753A1 beschriebene Gerät ist zwar dem Golfsport zuzuordnen, dient aber nicht der Platzvorbereitung, sondern als Trainingsgerät, das Parameter des Golfschwunges durch Messung erfasst. Das Gerät verwendet Leuchteinrichtungen um die Fuß- und Ballposition zu markieren, ist aber zum Positionieren der Abschlagmarkierungen nicht geeignet.

Die Schriften DE 102007030989A1, DE29716316U1, DE102007039341A1, DE102007039342A1 und US000003936197A beschreiben Geräte, die Licht - bzw. Laserstrahlen einsetzen, aber so wie beschrieben, zum Positionieren der Abschlagmarkierungen nicht eingesetzt werden können.

US8690715 offenbart eine Beleuchtungsvorrichtung zum Projizieren von Spielfeldmarkierungen auf ein Spielfeld. Nach der gängigen Lehre sind derartige Spielfeldmarkierungen wie beispielsweise in der Figur 1 der US8690715 ersichtlich nicht zur Kennzeichnung einer eindeutigen Position verwendbar. Aus diesem Grund ist US8690715 nicht als ein den Stand der Technik definierendes Dokument anzusehen.

US11161028 offenbart keine Vorrichtung zur Ermittlung von zwei Punkten durch das Leiten von Lichtstrahlen von einem Hochpunkt auf Markierungspositionen, wobei die Hauptachsen der Lichtstrahlen betragsmäßig ähnliche oder gleiche Winkel zu dem Untergrund oder zu einer horizontalen Achse aufweisen. Die Lehre von US11161028 ist im Unterschied zu der im Folgenden diskutierten Patentanmeldung nicht auf das Erstellen von Markierungspositionen gleichen oder ähnlichen Abständen zu der Vorrichtung beschränkt.

US20080254920 offenbart das Anzeigen von Spielfeldmarkierungen. Gleichsam wie US8690715 bildet US20080254920 keinen relevanten Stand der Technik zu der erfindungsgemäßen Vorrichtung.

WO2016023051 offenbart, dass ein Kreis auf das Spielfeld projiziert wird. Nach der gängigen Lehre ist ein Kreis ungeeignet, mehrere einzelne Markierungspositionen auf einem Spielfeld eindeutig zu kennzeichnen.

Nach dem Stand der Technik ist das Setzen der Abschlagmarkierungen ein nicht zufriedenstellend gelöstes Problem. Das Setzen der Abschlagmarkierungen unterliegt in einem gewissen Ausmaß dem subjektiven Empfinden dem auszuführenden Mittglied der Spielleitung, welches Mitglied die einzelnen Positionen der Abschlagmarkierungen üblicher Weise einschätzt. Der Einfluss des subjektiven Empfindens des ausführenden Mitgliedes ist unter anderem dadurch begründet, dass technische Hilfsmittel in neu einem sehr geringen Ausmaß eingesetzt werden.

Der Erfindung liegt die Aufgabe zugrunde, die Abschlagmarkierungen auf Golfplätzen mit geringem Aufwand und in einer genauen und reproduzierbaren Weise zu positionieren und gegebenenfalls auszurichten. Das Verfahren zur Positionierung der Abschlagmarkierungen soll möglichst kurz dauern.

Erfindungsgemäß wird dies durch eine Vorrichtung nach dem Anspruch 1 erreicht.

Erfindungsgemäß wird dies dadurch erreicht, dass
mehrere Bündel von Lichtstrahlen durch zumindest eine Lichtquelle abgegeben werden, welche Bündel von Lichtstrahlen von einem zu dem Untergrund beabstandeten Hochpunkt auf den Untergrund gerichtet sind,
wobei durch einzelne Bündel von Lichtstrahlen mehrere Muster auf dem Untergrund projiziert werden,
wobei ein einzelnes Bündel von Lichtstrahlen eine einzelne Markierungsposition durch ein einzelnes Muster der mehreren Muster kennzeichnet,
wobei jedes Bündel von Lichtstrahlen eine Hauptachse umfasst,
welche Hauptachse in einem spitzen Winkel zu dem Untergrund und/oder zu einer gedachten horizontalen Achse orientiert ist,
in welcher Markierungsposition eine Abschlagmarkierung anordenbar ist.

Die erfindungsgemäße Vorrichtung ist vorzugsweise tragbar ausgeführt.

Es wird durch die zumindest eine Lichtquelle ein Bündel von Lichtstrahlen mit einer Hauptachse ausgegeben, welche Hauptachse auf den Untergrund auftrifft. Es wird durch das am Untergrund auftreffende Bündel von Lichtstrahlen eine Markierung gezeichnet, welche Markierungen einen Aufschlagpunkt hinreichend genau definieren. Im Unterschied zu den Verfahren und Vorrichtungen nach dem Stand der Technik sind die Lichtstrahlen in einem spitzen Winkel zu dem Untergrund orientiert. Hierdurch kann die Orientierung und der Abstand der Markierungsposition zu der Vorrichtung, insbesondere zu dem Hochpunkt durch das Bündel von Lichtstrahlen bestimmt werden. Ebenso können mehrere Markierungspositionen durch die Verwendung mehrerer Bündel von Lichtstrahlen zueinander definiert werden. Im Regelfall können mit der erfindungsgemäßen Vorrichtung zwei Markierungspositionen zum Setzen jeweils einer Abschlagmarkierung angezeigt werden.

Bei einer Ansicht auf die Vorrichtung von oben können die Markierungspositionen benachbart zu unterschiedlichen Seiten der Vorrichtung auf den Untergrund projiziert werden. In einer bevorzugten Ausführungsform werden die Markierungspositionen bei einer Ansicht auf die Vorrichtung von oben benachbart zu gegenüberliegenden Seiten der Vorrichtung auf den Untergrund projiziert. Dies wird weiters nachstehend anhand von Figuren erläutert.

Es können der spitze Winkel alpha, welchen Winkel alpha der erste Lichtstrahl zu dem Untergrund aufweist, und der spitze Winkel beta betragsmäßig gleich sein. Dies kann insbesondere bei einem ebenen und sich horizontal erstreckenden Untergrund der Fall sein.

Es können die Winkel alpha und beta unterschiedlich sein.

Die erfindungsgemäße Vorrichtung kann sich dadurch auszeichnen, dass
die Markierungspositionen bei einer Ansicht auf die Vorrichtung auf dem Untergrund benachbart zu unterschiedlichen Seiten der Vorrichtung angeordnet werden.

Die erfindungsgemäße Vorrichtung kann, dadurch gekennzeichnet, dass
die Bündel der Lichtstrahlen bei einer Ansicht auf die Vorrichtung von oben in unterschiedliche Richtungen abgegeben werden.

Das Projizieren der Markierungspositionen, welche Markierungspositionen bei einer Ansicht von oben benachbart zu unterschiedlichen Seiten der Vorrichtung auf den Untergrund projiziert werden, erfolgt dadurch, dass die Hauptstrahlen der Lichtstrahlen von der Vorrichtung in unterschiedliche Richtungen ausgegeben werden.

Die erfindungsgemäße Vorrichtung kann sich dadurch auszeichnen, dass die Markierungspositionen bei einer Ansicht auf die Vorrichtung auf dem Untergrund benachbart zu gegenüberliegenden Seiten der Vorrichtung angeordnet werden.

Die erfindungsgemäße Vorrichtung kann sich dadurch auszeichnen, dass die Bündel der Lichtstrahlen bei einer Ansicht auf die Vorrichtung von oben in entgegengesetzte Richtungen abgegeben werden.

Ein Projizieren der Markierungspositionen auf bei einer Ansicht von oben gegenüberliegende Punkte des Untergrundes kann bedingen, dass die Hauptstrahlen von der Vorrichtung in einander entgegengesetzte Richtungen ausgegeben werden. Eine Ausgabe der Lichtstrahlen in entgegengesetzte Richtungen ergibt die Projektion von Markierungspositionen links und rechts von der Vorrichtung.

Das Muster kann beispielsweise und somit nicht einschränkend eine Punktform oder eine Kreuzform oder eine andere dem Fachmann bekannte Form aufweisen, welche Form nach dem Stand der Technik eine hinreichend genaue Kennzeichnung eines Punktes auf einem Untergrund erlaubt.

Das Muster kann auch eine Richtungsangabe umfassen. Bei Verwendung der Kreuzform als Muster kann ein Schenkel des Kreuzes mit einer größeren Schenkellänge als die anderen Schenkellängen ausgeführt sein.

Das Bündel von Lichtstrahlen kann zur Anzeige des Punktes beziehungsweise der Markierungsposition durch eine Linse geleitet werden. Weiters ist es möglich, den Punkt beziehungsweise die Markierungsposition durch mehrere Bündel anzuzeigen, welche Bündel gemeinsam eine geometrische Form wie ein Kreuz oder einen Kreis anzeigen.

Es ist hierbei entscheidend, dass eine Hauptachse eines Bündels von Lichtstrahlen einen vom Untergrund beabstandeten Hochpunkt durchläuft, welcher Lichtstrahl in einem spitzen Winkel auf den Untergrund gerichtet ist.

Die Hauptachsen, welche Hauptachsen von dem Untergrund im Wesentlichen gleich in vertikaler Richtung beabstandete und zueinander in einem definierten Abstand angeordnete Hochpunkte durchlaufen, treffen in ähnlichen, auf den Untergrund projizierten Abständen zu den Hochpunkten auf. Dies ist insbesondere der Fall, wenn der Untergrund eben ist und sich horizontal erstreckt.

Der Fachmann kann im Sinne einer äquivalenten oder naheliegenden Ausführung der erfindungsgemäßen Vorrichtung unterschiedliche Höhenlagen der Hochpunkte zu dem Untergrund oder eine von dem erwähnten Idealfall abweichende Form des Untergrundes durch unterschiedliche spitze Winkel alpha und beta kompensieren. Unterschiedliche Höhenlagen der Hochpunkte können beispielsweise durch einen geneigten Untergrund oder durch einen gekrümmten Untergrund bedingt sein. Eine solche Ausführung ist durch den Wortlaut des Anspruches 1 nicht ausgeschlossen.

Die erfindungsgemäße Vorrichtung kann sich dadurch auszeichnen, dass
die Vorrichtung eine Messvorrichtung zur Bestimmung des vertikalen Abstandes umfasst.

Die Vorrichtung kann eine erste Messvorrichtung zur Bestimmung eines vertikalen ersten Abstandes eines ersten Höhenpunktes zu dem Untergrund und eine zweite Messvorrichtung zur Bestimmung eines vertikalen zweiten Abstandes eines zweiten Hochpunktes zu dem Untergrund umfassen. Es können die spitzen Winkel alpha, beta in Abhängigkeit der vertikalen Abstände so gewählt werden, dass die Abstände zwischen dem jeweiligen auf den Untergrund projizierten Hochpunkt und der jeweiligen Markierungsposition gleich sind.

Die erfindungsgemäße Vorrichtung kann sich dadurch auszeichnen, dass
zwischen der zumindest einen Lichtquelle und dem Untergrund ein Lichtstrahlenleitelement und/oder Lichtstrahlenfokussierungselement angeordnet ist, welches Lichtstrahlenleitelement beziehungsweise welches Lichtstrahlenfokussierungselement der Lichtstrahl durchläuft.

Ein Lichtstrahlenleitelement kann beispielsweise ein Element mit einer spiegelnden Oberfläche sein. Durch das Lichtstrahlenleitelement kann die Richtung eines Lichtstrahles geändert werden. Durch das Lichtstrahlenleitelement kann auch ein Lichtstrahl geteilt werden.

Die erfindungsgemäße Vorrichtung kann auf der Verwendung von Laserlicht basieren. Der Fachmann kann auch die Verwendung anderer Lichtarten vorsehen, welche Lichtarten die Verwendung von Lichtstrahlenfokussierungselementen erfordern können, um die Markierungsposition mit einer ausreichenden Lichtintensität anzuzeigen.

Die erfindungsgemäße Vorrichtung kann eine einzige Lichtquelle umfassen. Der von der einzigen Lichtquelle ausgegebene Lichtstrahl kann mittels eines Strahlenteilers geteilt werden, sodass mittels einer einzigen Lichtquelle mehrere Markierungspositionen angezeigt werden können.

Die erfindungsgemäße Vorrichtung kann sich dadurch auszeichnen, dass
eine erste Lichtquelle ein erstes Bündel von Lichtstrahlen und eine zweite Lichtquelle ein zweites Bündel von Lichtstrahlen abgeben.

Die Verwendung einer Anzahl Lichtquellen zur Anzeige von dieser Anzahl entsprechenden Anzahl von Markierungspositionen kann den Vorteil haben, dass keine von den Lichtquellen ausgegebenen Lichtstrahlen geteilt werden müssen. Die Intensität der Anzeige einer Markierungsposition kann bei der Verwendung von mehreren Lichtquellen höher als bei der Verwendung einer einzigen Lichtquelle jeweils zum Anzeigen mehrerer Markierungspositionen sein.

Die erfindungsgemäße Vorrichtung kann sich dadurch auszeichnen, dass
eine einzige Lichtquelle mehrere Bündel von Lichtstrahlen abgibt.

Das Vorsehen einer einzigen Lichtquelle hat den Nachteil, dass die von der einzigen Lichtquelle ausgegebenen Lichtstrahlen zur Anzeige von mehreren Markierungspositionen geteilt werden müssen. Es wird hierdurch die Intensität einer am Untergrund angezeigten Markierungsposition im Vergleich zu der Verwendung von mehreren Lichtquellen gemindert.

Die erfindungsgemäße Vorrichtung kann sich dadurch auszeichnen, dass
die Vorrichtung eine Visiervorrichtung wie Kimme und Korn, einen Stab, einen Lichtstrahl oder eine optische Visiereinrichtung umfasst,
welche Visiervorrichtung eine Ausrichtung der Hauptachsen zu der Spielrichtung erlaubt.

Die erfindungsgemäße Vorrichtung kann sich dadurch auszeichnen, dass
die Visiereinrichtung lösbar oder fest an der Vorrichtung angeordnet ist.

Die hier beispielhaft erwähnten Ausrichtvorrichtungen sind dem Fachmann bekannt. Der Fachmann kann auch andere, nach dem Stand der Technik bekannte Ausrichtvorrichtungen vorsehen. Mittels der Ausrichtvorrichtung kann die auf den Untergrund projizierte Hauptachse zu der Spielrichtung ausgerichtet werden. Üblicher Weise ist die auf den Untergrund projizierte Hauptachse in einem Winkel von 90 Grad zu der Spielrichtung orientiert.

Eine Visiervorrichtung wie Kimme und Korn, einen Stab, einen Lichtstrahl oder eine optische Visiereinrichtung ist von einer Person zu bedienen. Diese Ausführungsformen einer Visiereinrichtung unterliegen somit der Genauigkeit der Bedienung durch die Person.

Die erfindungsgemäße Vorrichtung kann sich dadurch auszeichnen, dass
die Vorrichtung eine Positionsbestimmungseinrichtung umfasst,
mittels welcher Positionsbestimmungseinrichtung die Position der Vorrichtung und die Ausrichtung der Hauptachse des Lichtstrahls in Bezug auf ein Koordinatensystem ermittelbar ist,
wobei die Spielrichtung in dem Koordinatensystem definiert ist,
sodass die Hauptachse des Lichtstahls zu der Spielrichtung ausrichtbar ist.Die Positionsbestimmungseinrichtung kann beispielsweise ein GPS-System sein.

Die erfindungsgemäße Vorrichtung kann auf einem Golfplatz verwendet werden. Vorzugsweise bestehen Plandaten über den Golfplatz, welche Plandaten in einer Datenbank abgespeichert sind. Die Plandaten können mit Daten über die Position der Vorrichtung und Ausrichtung des Hauptstrahls verglichen werden. Es kann eine Spielrichtung für eine Position der Vorrichtung und eine Ausrichtung der Hauptachsen nach den Spielregeln errechnet werden. Die Spielrichtung wird in Bezug auf das Koordinatensystem errechnet.

Die Vorrichtung kann eine Anzeige mit einer Angabe über eine erforderliche Veränderung der Ausrichtung des Hauptstrahls oder der Vorrichtung umfassen. Der Benutzer kann den Hauptstrahl oder die Vorrichtung insgesamt nach dieser Angabe einstellen. Ergänzend oder alternativ hierzu kann eine Ausrichtung auch über eine Steuervorrichtung erfolgen.

Die erfindungsgemäß Vorrichtung kann ein Ausrichten der einzelnen Hauptstrahlen oder ein gekoppeltes Ausrichten von mehreren Hauptstrahlen erlauben. Ein Ausrichten aller Hauptstrahlen kann durch ein Ausrichten der alle Hauptstrahlen ausgebenden Vorrichtung erfolgen.

Es ist oben erwähnt, dass das zur Kennzeichnung der Markierungsposition verwendete Muster eine Richtungsangabe umfasst. Durch das Ausrichtung der erfindungsgemäßen Vorrichtung wird ein Ausrichten der Hauptachse erreicht. Da durch die Hauptachse orientierten Lichtbündel ein definiertes Muster vorgeben, kann durch die Ausrichtung der erfindungsgemäßen Vorrichtung eine Ausrichtung der durch das Muster angezeigten Richtungsangabe erreicht werden.

Die erfindungsgemäße Vorrichtung kann sich dadurch auszeichnen, dass
der Hochpunkt durch eine Höhenstellvorrichtung stellbar ist,
wodurch ein Markierungspositionsabstand, welcher Markierungspositionsabstand zwischen zwei Markierungspositionen gemessen wird, durch einen vertikalen Abstand des Hochpunktes zu dem Untergrund veränderbar ist,
welche Höhenstellvorrichtung manuell und/oder durch einen Antrieb betätigbar ist.

Durch das Stellen der Hochpunkte wird bei einem gleichbleibenden spitzen Winkel der auf den Untergrund projizierte Abstand zwischen dem auf dem Untergrund projizierten Hochpunkt und der Markierungsposition auf dem Untergrund verändert.

Die erfindungsgemäße Vorrichtung kann sich dadurch auszeichnen, dass
der spitze Winkel durch eine Winkelstellvorrichtung stellbar ist, sodass der Markierungspositionsabstand durch ein Verändern des spitzen Winkels einer Hauptachse einstellbar ist,
wobei die Winkelstellvorrichtung manuell und/oder durch einen Antrieb betätigbar ist.

Durch eine Veränderung des spitzen Winkels wird bei einer unveränderten Höhenlage des Hochpunktes der auf den Untergrund projizierte Abstand zwischen dem Hochpunkt und der Markierungsposition verändert.

Der Benutzer kann den spitzen Winkel und/oder die Höhenlage des Hochpunktes stellen, um so den auf den Untergrund projizierten Abstand zwischen dem Hochpunkt und der Markierungsposition zu verändern.

Der Untergrund kann eine ebene und sich horizontal erstreckende Fläche sein. Ein solcher Untergrund ist jedoch in der Natur und somit nicht am Golfplatz herstellbar. Die hier offenbarte Vorrichtung kann sich auch dadurch auszeichnen, dass durch ein Stellen der Höhenlage des Hochpunktes und/oder durch ein Stellen des spitzen Winkels ein von der Idealform abweichender Untergrund bei der Anzeige der Markierungspositionen berücksichtigt wird. Dies kann implizieren, dass die erfindungsgemäße Vorrichtung Messsysteme zur Aufnahme der geometrischen Form des Untergrundes umfasst. Weiters kann die erfindungsgemäße Vorrichtung eine Recheneinheit zum Berechnen des spitzen Winkels und/oder der Höhenlage des Hochpunktes unter Berücksichtigung der Form des Untergrundes umfassen.

Die erfindungsgemäße Vorrichtung kann sich dadurch auszeichnen, dass
die Vorrichtung eine Anzeigevorrichtung umfasst,
auf welcher Anzeigevorrichtung
eine Veränderung oder ein Wert des Abstandes zwischen dem Hochpunkt und dem Untergrund und/oder
eine Veränderung oder ein Wert des spitzen Winkels oder der Zahlenwert des spitzen Winkels und/oder
der Musterabstand auf einer angezeigt werden.

Die Anzeigevorrichtung kann die Informationen zum manuellen Stellen der erforderlichen Stellvorrichtung anzeigen. Weiters kann die Anzeigevorrichtung die erwähnten Informationen zu Dokumentationszwecken anzeigen.

Die erfindungsgemäße Vorrichtung kann sich dadurch auszeichnen, dass
eine Leuchtdauer der zumindest einen Lichtquelle durch eine Zeitsteuerungseinheit regelbar ist.

Die erfindungsgemäße Vorrichtung kann sich dadurch auszeichnen, dass
die zumindest eine Lichtquelle, gegebenenfalls die Lichtstrahlleitelemente und gegebenenfalls die Lichtstrahlfokussierungselemente auf einer Trägerplatte angeordnet sind,
welche Trägerplatte um zumindest eine horizontale Achse arretierbar drehbar gelagert ist, sodass
die Hochpunkte und die Markierungspositionen in einer sich vertikal, in einem Winkel von 90 Grad zu der Spielrichtung erstreckenden Ebene angeordnet sind.

Eine erste horizontale Achse kann in einem Winkel von 90 Grad zu der Spielrichtung und somit parallel zu der auf den Untergrund projizierten Hauptachse angeordnet sein. Eine zweite horizontale Achse kann in einem Winkel von 90 Grad zu der ersten horizontalen Achse angeordnet sein.

Die Trägerplatte kann frei schwenkend um die erste Achse und/oder um die zweite Achse gelagert sein. Eine Trägerplatte, welche Trägerplatte in einer vorteilhaften Weise ihren Schwerpunkt unterhalb der zumindest einen Achse aufweist, wird durch die Schwerkraft ausgerichtet. Die Trägerplatte ist somit kardanisch gelagert.

Diese Ausrichtung zufolge der Schwerkraft kann um eine Achse oder um zwei Achsen erfolgen, wie dies bei anderen Vorrichtungen nach dem Stand der Technik bekannt ist. Die erfindungsgemäße Vorrichtung kann Arretiermittel zum Sperren der Drehbewegung der Trägerplatte um diese Achse beziehungsweise diese Achsen haben. Weiters kann die Lagerung um die erwähnte Achse auch eine Dämpfung und/oder einen Widerstand umfassen. Ein Widerstand unterbindet beispielsweise, dass die Trägerplatte zufolge von Umwelteinflüssen wie Wind neu ausgerichtet wird.

Die erfindungsgemäße Vorrichtung kann sich auch dadurch auszeichnen, dass die Trägerplatte starr zu einem weiteren Element wie einem Gehäuse gelagert ist, welches Gehäuse um zumindest eine horizontale Achse drehbar gelagert ist.

Die erfindungsgemäße Vorrichtung kann sich dadurch auszeichnen, dass
eine Laserausgabevorrichtung als die zumindest eine Lichtquelle dient und die Laserausgabevorrichtung durch ein Kühlmedium gekühlt wird.

Ein Laserlicht zeichnet sich nach der gängigen Lehre durch eine starke Bündelung und durch eine hohe Intensität des Lichtes aus. Aus diesem Grund ist die Verwendung von Laserlicht bei der erfindungsgemäßen Vorrichtung vorteilhaft. Der Fachmann kann auch andere Lichtformen vorsehen.

Der Fachmann kann bei der Verwendung einer zu der Laserausgabevorrichtung unterschiedlichen Lichtquelle auch eine Kühlung dieser Lichtquelle durch ein Kühlmedium vorsehen.

Die erfindungsgemäße Vorrichtung kann sich dadurch auszeichnen, dass
die zumindest eine Lichtquelle und gegebenenfalls die Lichtstrahlenleitelemente und gegebenenfalls die Lichtstrahlenfokussierungselemente in einem Gehäuse angeordnet sind, welches Gehäuse Lichtauslassöffnungen umfasst, welche Lichtauslassöffnungen mit einem transparenten Material abgedichtet sein können.

Das Gehäuse kann wasserdicht und/oder luftdicht sein.

Die erfindungsgemäße Vorrichtung kann sich dadurch auszeichnen, dass
die Vorrichtung zumindest eine Lichtquelle umfasst, welche Lichtquelle Licht mit unterschiedlicher Farbe ausstrahlt,
zwischen welchen Farben der Benutzer wählt.

Das Bereitstellen von Laserlichtstrahlen mit unterschiedlichen Farben macht es erforderlich, mehrere Laserlichtausgabevorrichtungen vorzusehen. Die erfindungsgemäße Vorrichtung kann sich dadurch auszeichnen, dass mit der Wahl des auszugebenden Laserlichtes auch die jeweilige Laserlichtausgabevorrichtung ausgewählt wird.

Die Erfindung wird anhand der folgenden, in den Figuren dargestellten Ausführungsformen ergänzend erläutert:
Fig. 1 zeigt das grundlegende System zur Anzeige der Markierungspositionen mittels der erfindungsgemäßen Vorrichtung durch eine Seitenansicht,
Fig. 2 zeigt ebenso das grundlegende System und die auf den Untergrund projizierten Muster durch eine Ansicht von oben,
Fig. 3 ist eine orthogonale Ansicht einer Ausführungsform des auf einem Foto- oder Videostativ mit Schwenkkopf montierten Gerätes,
Fig. 4 ist eine orthogonale geöffnete Ansicht der Ausführung mit kardanischer Aufhängung des Trägers mit Halterungen für die Lichtquellen und der Möglichkeit zur Anbringung einer berührungslosen Schwingungsdämpfung,
Fig. 5 ist eine orthogonale Ansicht der Ausführung mit kardanischer Aufhängung des Gehäuses, mit im Inneren des Gehäuses fest oder um eine horizontale, in Spielrichtung weisende Achse, drehbar montierten Lichtquellen,
Fig. 6 ist die Ansicht einer Trägerplatte mit um eine horizontale, in Spielrichtung weisende Achse drehbar montierten Lichtquellen,
Fig. 7 zeigt eine genormte Montageschiene für eine Visiereinrichtung, welche Visiereinrichtung nach dem Stand der Technik bei anderen Vorrichtungen eingesetzt wird.

Die in den Figuren gezeigten Ausführungsformen zeigen lediglich mögliche Ausführungsformen, wobei an dieser Stelle bemerkt sei, dass die Erfindung nicht auf diese speziell dargestellten Ausführungsvarianten derselben eingeschränkt ist, sondern auch Kombinationen der einzelnen Ausführungsvarianten untereinander und eine Kombination einer Ausführungsform mit der oben angeführten allgemeinen Beschreibung möglich sind. Diese weiteren möglichen Kombinationen müssen nicht explizit erwähnt sein, da diese weiteren möglichen Kombinationen aufgrund der Lehre zum technischen Handeln durch gegenständliche Erfindung im Können des auf diesem technischen Gebiet tätigen Fachmannes liegen.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsformen können für sich eigenständige erfinderische Lösungen darstellen. Die den eigenständigen erfinderischen Lösungen zugrundeliegende Aufgabe kann der Beschreibung entnommen werden.

In den Figuren sind die folgenden Elemente durch die vorangestellten Bezugszeichen gekennzeichnet:
- 1: Untergrund
- 2: erste Lichtquelle
- 3: zweite Lichtquelle
- 4: erster Lichtstrahl
- 5: zweiter Lichtstrahl
- 6: erfindungsgemäße Vorrichtung
- 7: erster Hochpunkt
- 8: zweiter Hochpunkt
- 9: erste Markierungsposition
- 10: zweite Markierungsposition
- 11: erster Abstand auf Untergrund projiziert
- 12: zweiter Abstand auf Untergrund projiziert
- 13: Steher
- 14: Markierungspositionsabstand
- 15: Trägerplatte
- 16: Achse
- 17: Spielrichtung
- 18: vertikale Ebene
- 19: Ausrichtungsline
- 20: Visiereinrichtung
- 21: weiterer vertikaler Lichtstrahl
- 22: Position vertikal unterhalb der Vorrichtung
- 23: weiterer geneigter Lichtstrahl
- 24: Lichtquelle für Lichtstrahl 23
- 25: Arretiermittel
- 26: dritte Lichtquelle für den Lichtstrahl 21
- 27: Richtungspunkt

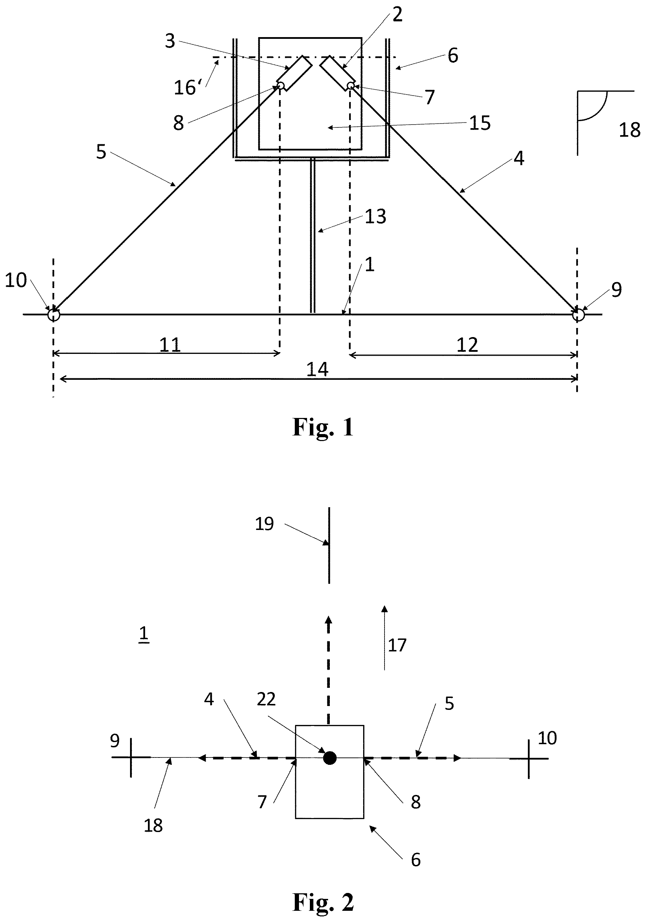

Die Figur 1 veranschaulicht anhand eines Schnittbildes mit einer vertikalen Schnittebene das System der Anzeige von Markierungspositionen, welches Anzeigesystem mit der erfindungsgemäßen Vorrichtung umsetzbar ist. Die erfindungsgemäße Vorrichtung 6 dient zum Anzeigen von Markierungspositionen 9, 10 auf einem Untergrund 1 eines Golfplatzes, wobei die erfindungsgemäße Vorrichtung 6 zu dem Untergrund 1 angeordnet ist. Der Untergrund 1 kann im Idealfall eine ebene und sich horizontal erstreckende Ebene sein, wie dies in Figur 1 schemenhaft dargestellt ist.

Die erfindungsgemäße Vorrichtung 6 dient insbesondere dem Anzeigen von Markierungspositionen 9, 10 links und rechts von der Vorrichtung 6, wobei beispielsweise in eine nachstehend beschriebene Spielrichtung 17 geblickt wird. Die Vorrichtung ist zwischen den Markierungspunkten 9, 10 angeordnet. Diese Anordnung der Vorrichtung entspricht im Wesentlichen der Position des Spielleiters, welcher Spielleiter nach der gängigen Lehre zu sich links und rechts angeordnete Markierungsposition definiert.

Die Vorrichtung 6 umfasst eine erste Lichtquelle 2, welche erste Lichtquelle 2 einen ersten Lichtstrahl 4 ausgibt. Weiters umfasst die Vorrichtung 6 ein zweite Lichtquelle 3, welche zweite Lichtquelle 3 einen zweiten Lichtstrahl 5 ausgibt.

In den Figuren wird in einer vereinfachten Weise ein Bündel von Lichtstrahlen als ein Lichtstrahl 4, 5, insbesondere als die Hauptachse der Lichtstrahlen dargestellt und in der Figurenbeschreibung auch so beschrieben. Der in der Figurenbeschreibung verwendete Begriff "Lichtstrahl" ist auch als ein Bündel von Lichtstrahlen zu verstehen.

Ein Bündel an Lichtstrahlen 4, 5 weist einen sich ausschließlich auf die Größe der Markierungsposition 9, 10 erstreckenden Querschnitt auf.

Die Lichtstrahlen 4, 5 werden jeweils von einem durch die Lichtquellen 2, 3 definierten Hochpunkt 7, 8 auf den Untergrund 1 gerichtet. Die Lichtstrahlen 4, 5 durchlaufen den jeweiligen Hochpunkt 7, 8; es ist nicht zwingend, dass zumindest eine Lichtquelle 2, 3 den jeweiligen Hochpunkt 7, 8 ausbildet. Der Fachmann erkennt, dass der Hochpunkt 7, 8 auch durch ein in Figur 1 nicht dargestelltes Lichtstrahlleitelement definiert werden kann.

Durch die Orientierung der Lichtquellen 2, 3 beziehungsweise durch ein Einrichten von in Figur 1 nicht dargestellten Lichtstrahlleitelementen wird der jeweilige Lichtstrahl 4, 5 auf den Untergrund 1 gerichtet.

Durch einen Lichtstrahl 4, 5 wird ein Muster auf den Untergrund 1 projiziert. Das Muster weist eine geometrische Form auf, welche geeignet ist, eine eindeutige Markierungsposition 9, 10 und somit einen Aufschlagpunkt hinreichend genau zu kennzeichnen. Das Muster kann beispielsweise und nicht einschränkend eine Punktform oder eine Kreuzform aufweisen. Das Muster weist vorzugsweise keine den Grundriss einer Abschlagsmarkierung oder eine Projektionsfläche einer die Abschlagsmarkierung haltende Wand überschreitende Flächenausdehnung auf.

Weiters verwendet der Fachmann einen Lichtstrahl 4, 5 mit einer ausreichenden Intensität, sodass das Muster auf dem Untergrund 1 gut sichtbar ist.

Der Benutzer kann eine in Figur 1 nicht dargestellte Abschlagmarkierung an der Markierungsposition 9, 10 anordnen.

Die in Figur 1 skizzierte Ausführungsform betrifft die Sonderform, dass die Markierungspositionen 9, 10 benachbart zu unterschiedlichen Seiten, insbesondere zu gegenüberliegenden Seiten der Vorrichtung 6 angeordnet sind. Es werden somit mit der erfindungsgemäßen Vorrichtung 6 links und rechts von der erfindungsgemäßen Vorrichtung angeordnete Markierungspositionen 9, 10 erzeugt.

Bei einer gleichen Höhenposition der Hochpunkte 7, 8 und bei gleichen Winkeln alpha und beta sind die auf den Untergrund 1 projizierten Abstände zwischen den Hochpunkten 7, 8 und den Markierungspositionen 9, 10 gleich. Eine auf einem Steher 13 am Untergrund 1 stehende Vorrichtung 6 weist eine definierte Beabstandung zu dem Untergrund 1 auf.

Es ist der Hochpunkt 7, 8 von dem Untergrund 1 beabstandet. Es sind die Lichtquellen 2, 3 so ausgerichtet, dass die in Figur 1 als Lichtstrahl 4, 5 dargestellte Hauptachse des Bündels von Lichtstrahlen einen spitzen Winkel alpha, beta zu dem Untergrund 1 einschließt.

Es können in der Richtung eines Lichtstrahls 4, 5 gesehen zwischen der Lichtquelle 2, 3 und dem Untergrund 1 ein Lichtstrahlenleitelement und/oder

Lichtstrahlenfokussierungselement angeordnet sein. Die Figur 1 zeigt diese Elemente nicht. Ein Lichtstrahlenleitelement kann beispielsweise erlauben, dass die Lichtquelle 2, 3 in eine andere Richtung als in die in Figur 1 eingetragene Richtung den Lichtstrahl ausgibt und mittels des Lichtstrahlenleitelements der Lichtstahl 4, 5 auf den Untergrund 1 gerichtet wird.

Die in Figur 1 schemenhaft dargestellte erfindungsgemäße Vorrichtung 6 zeichnet sich dadurch aus, dass die erste Lichtquelle 2 einen ersten Lichtstrahl 4 und die zweite Lichtquelle 3 einen zweiten Lichtstrahl 5 abgibt. Alternativ hierzu ist es denkbar, dass eine einzige Lichtquelle verwendet wird und die zwei Lichtstrahlen über einen Lichtteiler erzeugt werden. Ebenso kann eine einzige Lichtquelle verwendet werden, die zwei Lichtstrahlen ausgibt.

Die erfindungsgemäße Vorrichtung 6 kann sich dadurch auszeichnen, dass der Hochpunkt 7, 8 durch eine Höhenstellvorrichtung stellbar ist, wodurch ein Markierungspositionsabstand 14, welcher Markierungspositionsabstand 14 zwischen zwei Markierungspositionen 9, 10 gemessen wird, über einen vertikalen Abstand des Gerätes zu dem Untergrund 1 veränderbar ist, welche Höhenstellvorrichtung manuell und/oder durch einen Antrieb betätigbar ist. Bei der in Figur 1 gezeigten Ausführungsform ist der Steher 13 in seiner Länge verstellbar ausgeführt. Der Fachmann kennt weitere Möglichkeiten zum Stellen der Höhenlage der Lichtquellen 2, 3.

Der Steher 13 der in Figur 1 gezeigten Ausführungsform kann in den Boden gerammt werden, wobei ein Loch im Untergrund 1 geschaffen werden kann. Ein solches Loch kann als eine Markierung der Position der Vorrichtung 6 angesehen werden, welche Markierung das wiederholte Aufstellen der Vorrichtung 6 an dieser Position erlaubt.

Die erfindungsgemäße Vorrichtung 6 kann sich weiters dadurch auszeichnen, dass die durch den spitzen Winkel alpha, beta beschriebene Ausgaberichtung des Lichtstahls 4, 5 durch eine Winkelstellvorrichtung stellbar ist, sodass der Musterabstand durch ein Verändern des spitzen Winkels einer Hauptachse einstellbar ist, wobei die Winkelstellvorrichtung manuell und/oder durch einen Antrieb betätigbar ist.

Der Benutzer kann in einer vorteilhaften Weise die erwähnten Stellvorrichtungen kombinieren.

Die erfindungsgemäße Vorrichtung 6 kann sich weiters dadurch auszeichnen, dass die Lichtquellen 2, 3 auf einer Trägerplatte 15 angeordnet sind, welche Trägerplatte 15 um zumindest eine horizontale Achse 16' arretierbar drehbar gelagert ist, sodass die Hochpunkte 7, 8 und die Markierungspositionen 9, 10 in einer sich vertikal, in einem Winkel von 90 Grad zu der Spielrichtung 17 erstreckenden Ebene 18 angeordnet sind.

Die Figur 2 zeigt eine Ansicht von oben auf den Untergrund 1, welche Ansicht unter anderem die auf den Untergrund 1 projizierten Markierungen 9, 10, 22 umfasst.

Es sind die Markierungspositionen 9, 10 und die Hochpunkte 7, 8 in einer sich vertikal erstreckenden Ebene 18 angeordnet, welche vertikale Ebene 18 in der Figur 2 als eine den Grundriss der Ebene 18 darstellenden Linie eingeragen ist. Weiters erstrecken sich die Lichtstrahlen 4, 5 und die Achse 16' in dieser Ebene 18.

Es sind die Markierungspositionen 9, 10 bei der gezeigten Ansicht von oben benachbart zu gegenüberliegenden Seiten der Vorrichtung 6 angeordnet. Es werden die Lichtstrahlen 4, 5, insbesondere die horizontale Komponente der Lichtstrahlen 4, 5 in entgegengesetzte Richtungen ausgegeben. Es werden somit links und rechts zu der Vorrichtung und am Untergrund angeordnete Markierungspositionen 9, 10 erzeugt.

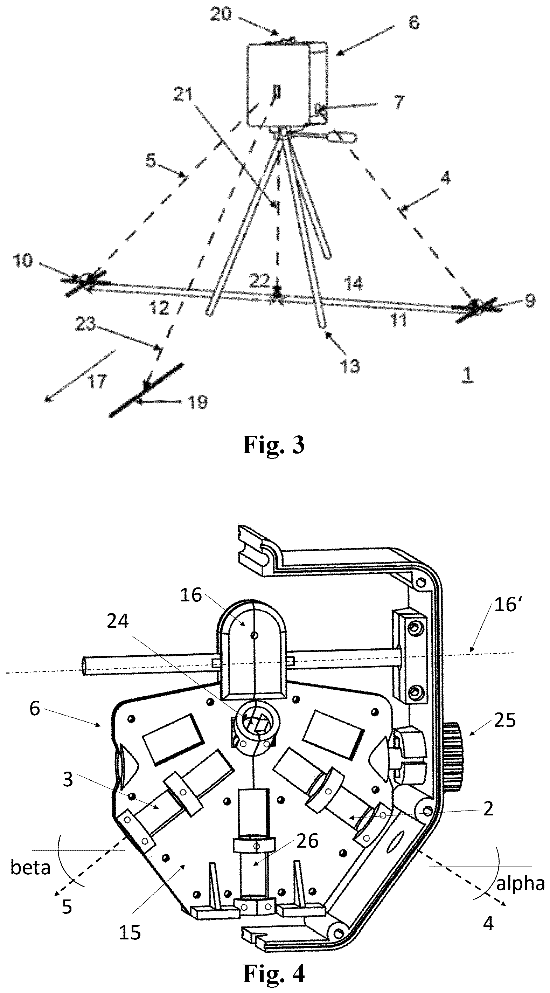

Der Punkt 22 dient zur Kennzeichnung der Position der Vorrichtung 6 am Untergrund. Der Punkt 22 kann durch einen von der Vorrichtung 6 vertikal auf den Untergrund projizierten weiteren vertikal ausgerichteten Lichtstrahl 21 erzeugt werden, wie dies in der Figur 3 ersichtlich ist. Der Anwender kann den Punkt 22 am Untergrund markieren.

In einer bevorzugten Anwendungsform ist die vertikale Ebene 18 in einem Winkel von 90 Grad zu einer Spielrichtung 17 angeordnet. Die Vorrichtung kann eine Visiervorrichtung 20 umfassen, welche Visiervorrichtung 20 ein Ausrichten dieser in die Spielrichtung 17 und somit ein Ausrichten der Ebene 18 in einem Winkel von 90 Grad zu der Spielrichtung 17 erlaubt.

Die Spielrichtung 17 kann zumindest eine horizontale Komponente umfassen, zu welcher horizontalen Komponente die Ebene 18 in einem Winkel von 90 Grad ausgerichtet sind kann.

Figur 3 zeigt eine dreidimensionale Ansicht einer möglichen Ausführungsform der erfindungsgemäßen Vorrichtung 6. Die in der Figur 3 gezeigte Vorrichtung kann die in der Figur 2 gezeigte Vorrichtung sein.

Die tragbare Vorrichtung 6 ist auf drei Stehern 13 gelagert. Derartige Steher 13 sind beispielsweise zur Lagerung von Fotoapparaten bekannt und erlauben eine arretierbare Höhenverstellung und/oder Neigungsverstellung der Vorrichtung 6. Die Neigungsverstellung der Vorrichtung 6 kann wie oben beschrieben als eine Neigung der Vorrichtung 6 um eine Achse oder zwei Achsen erfolgen, welche Achse beziehungsweise welche Achsen in der Figur 3 nicht eingetragen sind.

Es ist die Vorrichtung 6 über das Stativ umfassend die Steher 13 in der Höhe und/oder in seiner Neigung zu dem Untergrund 1 stellbar. Hierdurch wird erreicht, dass die Lichtstrahlen 4, 5 auf den Untergrund 1 zur Markierung von Markierungspositionen 9, 10 projiziert werden, sodass an den Markierungspositionen 9, 10 in der Figur 3 nicht eingetragene Abschlagmarkierungen gesetzt werden können.

Die in Figur 3 dargestellte Ausführungsform umfasst eine optische Visiereinrichtung 20, wobei die hier offenbarte Erfindung keinesfalls auf optische Visiereinrichtungen zur Ausrichtung der Vorrichtung 6 in Spielrichtung 17 beschränkt ist. Der Fachmann kann auch andere Vorrichtungen zum Ausrichten der erfindungsgemäßen Vorrichtung 6 vorsehen.

Die erfindungsgemäße Vorrichtung 6 kann eine weitere Ausgabeeinheit zur Ausgabe eines weiteren lotrechten Lichtstahls 21 zur Markierung des Punktes 22 umfassen. Der Punkt 22 kann der Kennzeichnung der Position der erfindungsgemäßen Vorrichtungen 6 nach einem Versetzen der erfindungsgemäßen Vorrichtung 6 dienen. Die Verwendung des Stativs mit drei Stehern erlaubt in einer vorteilhaften Weise die Ausgabe des weiteren lotrechtend Lichtstrahls 21 zur Projektion des Punktes 22 auf den Untergrund 1.

Die erfindungsgemäße Vorrichtung 6 kann eine weitere Ausgabeeinheit zur Ausgabe eines weiteren geneigten Lichtstrahls 23 umfassen. Die Projizierung des weiteren geneigten Lichtstrahls 23 auf den Untergrund 1 schafft eine auf dem Untergrund 1 angezeigte Ausrichtungslinie 19. Die Vorrichtung 6 kann alternativ oder ergänzend zu der erwähnten Visiereinrichtung mittels der Ausrichtungslinie 19 ausgerichtet werden. Der Benutzer kann die Orientierung der Ausrichtungslinie 19 mit einer gedachten Spielrichtung 17 abgleichen und gegebenenfalls die Ausrichtung oder den Standort der Vorrichtung 6 ändern.

Eine gleichbleibende Höheneinstellung und Neigungsausrichtung kann durch ein Arretiermittel 25 erreicht werden. Das in Figur 3 gezeigte Stativ umfasst ein solches Arretiermittel 25.

Die Figur 4 zeigt eine Ausführungsform der erfindungsgemäßen Vorrichtung 6 in einem teilweise geöffneten und in einem offenen Zustand. Die erfindungsgemäße Vorrichtung 6 umfasst eine Trägerplatte 15, auf welcher Trägerplatte 15 eine erste Lichtquelle 2 zur Abgabe eines ersten Lichtstahls 4 in einem spitzen Winkel alpha ausgerichtet ist. Der Winkel alpha wird zwischen dem ersten Lichtstrahl 4 und einer Horizontalen gemessen. Die Horizontale kann zu dem in Figur 3 nicht eingetragenen Untergrund 1 sein. Die Trägerplatte 15 ist zu den Achsen 16, 16' kardanisch gelagert und richtet sich somit durch die Schwerkraft selbst aus. Die Vorrichtung 6 kann Arretierungsmittel 25 zum Sperren zumindest eines Freiheitsgrades umfassen.

Die Trägerplatte 15 umfasst weiters eine dritte Lichtquelle 26 zur Ausgabe des oben beschriebenen Lichtstrahls 21 und/oder des Lichtstrahls 23. Der Lichtstrahl 23

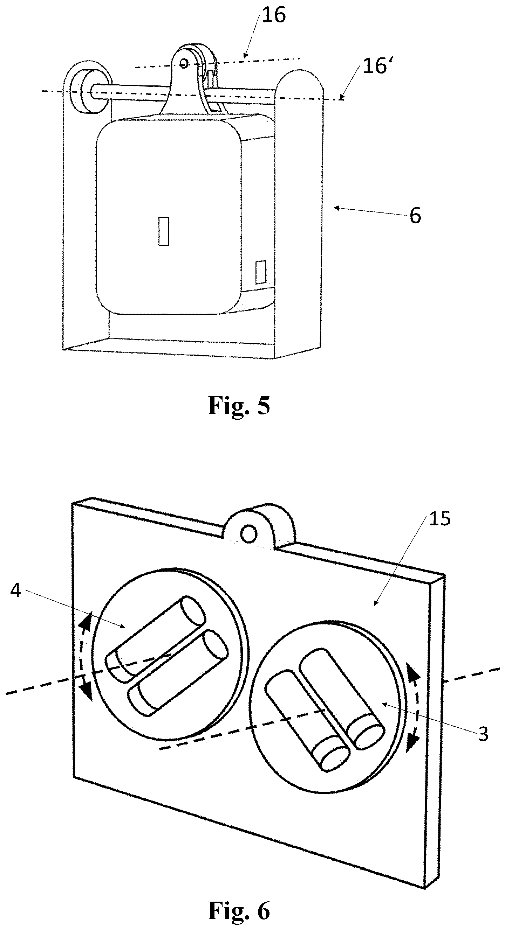

Die Figur 5 zeigt die in Figur 4 dargestellte Ausführungsform in einer geschlossenen Ansicht. Die Achsen 16, 16' sind außenliegend, sodass der Anwender ein Ausrichten um diese Achse 16, 16' beobachten kann.

Die Figur 6 zeigt eine mögliche Ausführungsform einer Lagerung von Lichtquellen 3, 4 auf der Trägerplatte 15. Die Lichtquellen 3, 4 sind zum Stellen des spitzen Winkels alpha, beta um eine Achse drehbar gelagert, welche Achse in einem Winkel von 90 Grad zu der Oberfläche der Trägerplatte 15 orientiert ist.

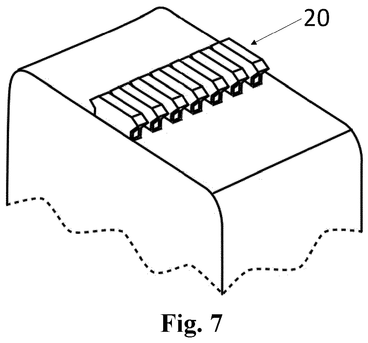

Fig. 7 zeigt eine genormte Montageschiene für eine Visiereinrichtung nach dem Stand der Technik, welche Montageschiene bei anderen Vorrichtungen eine Anwendung findet.

## Patentansprüche

1. Vorrichtung (6) zum Anzeigen von Markierungspositionen (9, 10) auf einem Untergrund (1) eines Golfplatzes,
welche Vorrichtung (6) zu dem Untergrund (1) angeordnet ist, wobei mehrere Bündel von Lichtstrahlen (4, 5) durch zumindest eine Lichtquelle (2, 3) abgegeben werden, **dadurch gekennzeichnet, dass** die Bündel von Lichtstrahlen (4, 5) von einem zu dem Untergrund (1) beabstandeten Hochpunkt (7, 8) auf den Untergrund (1) gerichtet sind,
wobei durch einzelne Bündel von Lichtstrahlen (4, 5) mehrere Muster auf dem Untergrund (1) projiziert werden,
wobei ein einzelnes Bündel von Lichtstrahlen (4, 5) eine einzelne Markierungsposition (9, 10) durch ein einzelnes Muster der mehreren Muster kennzeichnet,
wobei jedes Bündel von Lichtstrahlen (4, 5) eine Hauptachse umfasst,
welche Hauptachse in einem spitzen Winkel alpha, beta zu dem Untergrund (1) und/oder zu einer horizontalen Achse orientiert ist,
welche Winkel alpha, beta betragsmäßig gleich sind,
in welcher Markierungsposition (9, 10) eine Abschlagmarkierung anordenbar ist.

2. Vorrichtung (6) nach Anspruch 1, **dadurch gekennzeichnet, dass**
die Markierungspositionen (9, 10) bei einer Ansicht auf die Vorrichtung (6) auf dem Untergrund (1) benachbart zu unterschiedlichen Seiten der Vorrichtung (6) angeordnet werden.

3. Vorrichtung (6) nach einem der Ansprüche 1 bis 2, **dadurch gekennzeichnet, dass**
die Bündel der Lichtstrahlen (4, 5) bei einer Ansicht auf die Vorrichtung (6) von oben in unterschiedliche Richtungen abgegeben werden.

4. Vorrichtung (6) nach Anspruch 2, **dadurch gekennzeichnet, dass**
die Markierungspositionen (9, 10) bei einer Ansicht auf die Vorrichtung (6) auf dem Untergrund (1) benachbart zu gegenüberliegenden Seiten der Vorrichtung (6) angeordnet werden.

5. Vorrichtung (6) nach Anspruch 3, **dadurch gekennzeichnet, dass**
die Bündel der Lichtstrahlen (4, 5) bei einer Ansicht auf die Vorrichtung (6) von oben in entgegengesetzte Richtungen abgegeben werden.

6. Vorrichtung (6) nach einem der Ansprüche 1 bis 5, **dadurch gekennzeichnet, dass** zwischen der zumindest einen Lichtquelle (2, 3) und dem Untergrund (1) ein Lichtstrahlenleitelement und/oder ein Lichtstrahlenfokussierungselement angeordnet ist,
welches Lichtstrahlenleitelement und/oder welches Lichtstrahlenfokussierungselement der Lichtstrahl (4, 5) durchläuft.

7. Vorrichtung (6) nach einem der Ansprüche 1 bis 6, **dadurch gekennzeichnet, dass** eine erste Lichtquelle (2) ein erstes Bündel von ersten Lichtstrahlen (4) und eine zweite Lichtquelle (3) ein zweites Bündel von zweiten Lichtstrahlen (5) abgeben.

8. Vorrichtung (6) nach einem der Ansprüche 1 bis 7, **dadurch gekennzeichnet, dass** eine einzige Lichtquelle (2, 3) mehrere Bündel von Lichtstrahlen (4, 5) abgibt.

9. Vorrichtung (6) nach einem der Ansprüche 1 bis 8, **dadurch gekennzeichnet, dass** die Vorrichtung (6) eine an der Vorrichtung fest oder lösbar angeordnete Visiereinrichtung (20) zur Ausrichtung der Hauptachse des Lichtstrahles (4, 5) zu einer Spielrichtung (17) umfasst.

10. Vorrichtung nach einem der Ansprüche 1 bis 9, **dadurch gekennzeichnet, dass** die Vorrichtung (6) eine Positionsbestimmungseinrichtung umfasst,
mittels welcher Positionsbestimmungseinrichtung die Position der Vorrichtung und die Ausrichtung der Hauptachse des Lichtstrahls (4, 5) in Bezug auf ein Koordinatensystem ermittelbar ist,
wobei die Spielrichtung (17) in dem Koordinatensystem definiert ist,
sodass die Hauptachse des Lichtstahls (4, 5) zu der Spielrichtung (17) ausrichtbar ist.

11. Vorrichtung (6) nach einem der Ansprüche 1 bis 10, **dadurch gekennzeichnet, dass** das Muster eine zu der Spielrichtung (17) parallele Richtungsangabe umfasst.

12. Vorrichtung (6) nach einem der Ansprüche 1 bis 11, **dadurch gekennzeichnet, dass** der Hochpunkt (7, 8) durch eine Höhenstellvorrichtung stellbar ist,
durch welche Höhenstellvorrichtung der Abstand der zumindest einen Lichtquelle (2, 3) und/oder einen Lichtstrahlenleitelement und/oder
Lichtstrahlenfokussierungselementes und dem Untergrund (1) und folglich einen Markierungspositionsabstand (14), welcher Markierungspositionsabstand (14) zwischen den Markierungspositionen (9, 10) gemessen wird, über einen vertikalen Abstand der Vorrichtung (6) zu dem Untergrund (1) veränderbar ist,
welche Höhenstellvorrichtung manuell und/oder durch einen Antrieb betätigbar ist.

13. Vorrichtung (6) nach einem der Ansprüche 1 bis 12, **dadurch gekennzeichnet, dass** der spitze Winkel alpha, beta durch eine Winkelstellvorrichtung stellbar ist, sodass der Markierungspositionsabstand (14) durch ein Verändern des spitzen Winkels einer Hauptachse des Lichtstrahls (4, 5) einstellbar ist,
wobei die Winkelstellvorrichtung manuell und/oder durch einen Antrieb betätigbar ist.

14. Vorrichtung (6) nach einem der Ansprüche 1 bis 13, **dadurch gekennzeichnet, dass** die Vorrichtung (6) eine Anzeigevorrichtung umfasst,
auf welcher Anzeigevorrichtung
eine Veränderung oder ein Wert des Abstandes zwischen dem Hochpunkt (7, 8) und dem Untergrund (1) und/oder
eine Veränderung oder ein Wert des spitzen Winkels alpha, beta oder der Zahlenwert des spitzen Winkels alpha, beta und/oder
der Markierungspositionsabstand (14) angezeigt wird.

15. Vorrichtung (6) nach einer der Ansprüche 1 bis 14, **dadurch gekennzeichnet, dass** eine Leuchtdauer der zumindest einen Lichtquelle (15) durch eine Zeitsteuerungseinheit regelbar ist.

16. Vorrichtung (6) nach einem der Ansprüche 1 bis 15, **dadurch gekennzeichnet, dass** die zumindest eine Lichtquelle (3, 4), gegebenenfalls die Lichtstrahlleitelemente und gegebenenfalls die Lichtstrahlfokussierungselemente auf einer Trägerplatte (15) angeordnet sind,
welche Trägerplatte (15) um zumindest eine horizontale Achse (16') arretierbar drehbar gelagert ist, sodass
die Hochpunkte (7, 8) und die Markierungspositionen (9, 10) in einer sich vertikal, in einem Winkel von 90 Grad zu einer Spielrichtung (17) erstreckenden Ebene (18) angeordnet sind.

17. Vorrichtung (6) nach Anspruch 1 bis 16, **dadurch gekennzeichnet, dass**
die zumindest eine Lichtquelle (2, 3) durch ein Kühlmedium gekühlt werden.

18. Vorrichtung (6) nach Anspruch 1 bis 17, **dadurch gekennzeichnet, dass**
die zumindest eine Lichtquelle (2, 3) und gegebenenfalls die Lichtstrahlenleitelemente und gegebenenfalls die Lichtstrahlenfokussierungselemente in einem Gehäuse angeordnet sind, welches Gehäuse Lichtauslassöffnungen (11) aus einem transparenten Material oder Ausnehmungen umfasst.

19. Vorrichtung (6) nach Anspruch 1 bis 18, **dadurch gekennzeichnet, dass**
die Vorrichtung (6) zumindest eine Lichtquelle (2, 3) umfasst, welche Lichtquelle Licht mit unterschiedlicher Farbe ausstrahlt,
zwischen welchen Farben der Benutzer wählt.

## Claims

1. Device (6) for indicating marker positions (9, 10) on a surface (1) of a golf course, which device (6) is arranged relative to the surface (1), wherein several bundles of light rays (4, 5) are emitted by at least one light source (2, 3), **characterized in that** the bundles of light rays (4, 5) are directed from a high point (7, 8) spaced apart from the surface (1) onto the surface (1), wherein several patterns are projected onto the surface (1) by individual bundles of light rays (4, 5), wherein a single bundle of light rays (4, 5) indicates a single marker position (9, 10) by a single pattern of the several patterns, wherein each bundle of light rays (4, 5) comprises a principal axis, which principal axis is oriented at an acute angle alpha, beta to the surface (1) and/or to a horizontal axis, which angles alpha, beta are equal in magnitude, at which marker position (9, 10) a tee marker can be arranged.

2. Device (6) according to claim 1, **characterized in that** the marker positions (9, 10) are arranged on the surface (1) adjacent to different sides of the device (6) when viewed from above.

3. Device (6) according to one of claims 1 to 2, **characterized in that** the bundles of light rays (4, 5) are emitted in different directions when the device (6) is viewed from above.

4. Device (6) according to claim 2, **characterized in that** the marker positions (9, 10) are arranged on the surface (1) adjacent to opposite sides of the device (6) when viewed from above.

5. Device (6) according to claim 3, **characterized in that** the bundles of light rays (4, 5) are emitted in opposite directions when the device (6) is viewed from above.

6. Device (6) according to one of claims 1 to 5, **characterized in that** a light beam guiding element and/or a light beam focusing element is arranged between the at least one light source (2, 3) and the surface (1), the light beam (4, 5) is passing through the light beam guiding element and/or light beam focusing element.

7. Device (6) according to one of claims 1 to 6, **characterized in that** a first light source (2) emits a first bundle of first light rays (4) and a second light source (3) emits a second bundle of second light rays (5).

8. Device (6) according to one of claims 1 to 7, **characterized in that** a single light source (2, 3) emits several bundles of light rays (4, 5).

9. Device (6) according to one of claims 1 to 8, **characterized in that** the device (6) comprises a sighting device (20) arranged fixedly or detachably on the device for aligning the main axis of the light beam (4, 5) to a playing direction (17).

10. Device (6)according to one of claims 1 to 9, **characterized in that** the device (6) comprises a position determination device by means of which position determination device the position of the device and the orientation of the principal axis of the light beam (4, 5) can be determined with respect to a coordinate system, wherein the direction of play (17) is defined in the coordinate system, so that the principal axis of the light beam (4, 5) can be aligned to the direction of play (17).

11. Device (6) according to one of claims 1 to 10, **characterized in that** the pattern includes a direction indication parallel to the direction of play (17).

12. Device (6) according to one of claims 1 to 11, **characterized in that** the high point (7, 8) can be adjusted by a height adjustment device, by which height adjustment device the distance of the at least one light source (2, 3) and/or a light beam guiding element and/or light beam focusing element and the surface (1) and consequently a marker position distance (14), which marker position distance (14) is measured between the marker positions (9, 10), is changeable via a vertical distance of the device (6) to the surface (1), which height adjustment device is operable manually and/or by a drive.

13. Device (6) according to one of claims 1 to 12, **characterized in that** the acute angle alpha, beta can be adjusted by an angle adjustment device, so that the marker position distance (14) can be adjusted by changing the acute angle of a principal axis of the light beam (4, 5), wherein the angle adjustment device can be operated manually and/or by a drive.

14. Device (6) according to one of claims 1 to 13, **characterized in that** the device (6) comprises a display device on which a change or value of the distance between the high point (7, 8) and the surface (1) and/or a change or value of the acute angle alpha, beta or the numerical value of the acute angle alpha, beta and/or the marker position distance (14) is displayed.

15. Device (6) according to one of claims 1 to 14, **characterized in that** the illumination duration of the at least one light source (15) can be controlled by a time control unit.

16. Device (6) according to one of claims 1 to 15, **characterized in that** the at least one light source (3, 4), optionally the light beam guiding elements and optionally the light beam focusing elements are arranged on a carrier plate (15), which carrier plate (15) is rotatably mounted about at least one horizontal axis (16') so that the high points (7, 8) and the marker positions (9, 10) are arranged in a plane (18) extending vertically at an angle of 90 degrees to a playing direction (17).

17. Device (6) according to claims 1 to 16, **characterized in that** the at least one light source (2, 3) is cooled by a cooling medium.

18. Device (6) according to claims 1 to 17, **characterized in that** the at least one light source (2, 3) and optionally the light beam guiding elements and optionally the light beam focusing elements are arranged in a housing, which housing includes light outlet openings (11) made of a transparent material or recesses.

19. Device (6) according to claims 1 to 18, **characterized in that** the device (6) comprises at least one light source (2, 3), which light source emits light of different colors, from which the user can choose.

## Revendications

1. Dispositif (6) pour indiquer les positions des marqueurs (9, 10) sur une surface (1) d'un terrain de golf, lequel dispositif (6) est disposé par rapport à la surface (1), dans lequel plusieurs faisceaux de rayons lumineux (4, 5) sont émis par au moins une source lumineuse (2, 3), **caractérisé en ce que** les faisceaux de rayons lumineux (4, 5) étant dirigés depuis un point élevé (7, 8) espacé de la surface (1) vers la surface (1), chaque faisceau de rayons lumineux (4, 5) projetant plusieurs motifs sur la surface (1), par des faisceaux individuels de rayons lumineux (4, 5), un seul faisceau de rayons lumineux (4, 5) indiquant une seule position de marqueur (9, 10) par un seul motif parmi les différents motifs, chaque faisceau de rayons lumineux (4, 5) comprenant un axe principal, lequel axe principal est orienté à un angle aigu α, β par rapport à la surface (1) et/ou à un axe horizontal, les angles a, β étant égaux en magnitude, dans lequel un marqueur de départ peut être placé à la position de marqueur (9, 10).

2. Dispositif (6) selon la revendication 1, **caractérisé en ce que** les positions de marquage (9, 10) sur la surface (1) sont disposées à côté de différents côtés du dispositif (6) lorsqu'on les regarde de dessus.

3. Dispositif (6) selon l'une des revendications 1 à 2, **caractérisé en ce que** les faisceaux de rayons lumineux (4, 5) sont émis dans des directions différentes lorsque le dispositif (6) est vu d'en haut.

4. Dispositif (6) selon la revendication 2, **caractérisé en ce que** les positions de marquage (9, 10) sur la surface (1) sont disposées des deux côtés du dispositif (6) lorsqu'on les regarde de dessus.

5. Dispositif (6) selon la revendication 3, **caractérisé en ce que** les faisceaux de rayons lumineux (4, 5) sont émis dans des directions opposées lorsque le dispositif (6) est vu d'en haut.

6. Dispositif (6) selon l'une des revendications 1 à 5, **caractérisé en ce qu'**un élément de guidage de faisceau lumineux et/ou un élément de focalisation de faisceau lumineux est disposé entre au moins une source lumineuse (2, 3) et la surface (1), le faisceau lumineux (4, 5) passant à travers lequel élément de guidage de faisceau lumineux et/ou élément de focalisation de faisceau lumineux.

7. Dispositif (6) selon l'une des revendications 1 à 6, **caractérisé en ce qu'**une première source lumineuse (2) émet un premier faisceau de premiers rayons lumineux (4) et une seconde source lumineuse (3) émet un second faisceau de seconds rayons lumineux (5).

8. Dispositif (6) selon l'une des revendications 1 à 7, **caractérisé en ce qu'**une seule source lumineuse (2, 3) émet plusieurs faisceaux de rayons lumineux (4, 5).

9. Dispositif (6) selon l'une des revendications 1 à 8, **caractérisé en ce que** le dispositif (6) comprend un dispositif de visée (20) disposé de manière fixe ou amovible sur le dispositif pour aligner l'axe principal du faisceau lumineux (4, 5) sur une direction de jeu (17).

10. Dispositif selon l'une des revendications 1 à 9, **caractérisé en ce que** le dispositif (6) comprend un dispositif de détermination de position au moyen duquel la position du dispositif et l'orientation de l'axe principal du faisceau lumineux (4, 5) peuvent être déterminées par rapport à un système de coordonnées, dans lequel la direction de jeu (17) est définie dans le système de coordonnées, de sorte que l'axe principal du faisceau lumineux (4, 5) puisse être aligné sur la direction de jeu (17).

11. Dispositif (6) selon l'une des revendications 1 à 10, **caractérisé en ce que** le motif comprend une indication de direction parallèle à la direction de jeu (17).

12. Dispositif (6) selon l'une des revendications 1 à 11, **caractérisé en ce que** le point haut (7, 8) peut être ajusté par un dispositif de réglage en hauteur, lequel dispositif de réglage en hauteur permet de modifier la distance d'au moins une source lumineuse (2, 3) et/ou d'un élément de guidage de faisceau lumineux et/ou un élément de focalisation du faisceau lumineux et de la surface (1) et par conséquent une distance de position de marquage (14), laquelle distance de position de marquage (14) est mesurée entre les positions de marquage (9, 10), est modifiable via une distance verticale du dispositif (6) et de la surface (1), dont le dispositif de réglage en hauteur est actionnable manuellement et/ou par un moteur.

13. Dispositif (6) selon l'une des revendications 1 à 12, **caractérisé en ce que** l'angle aigu alpha, bêta peut être ajusté par un dispositif de réglage d'angle, de sorte que la distance de position de marquage (14) peut être ajustée en modifiant l'angle aigu d'un axe principal du faisceau lumineux (4, 5), dans lequel le dispositif de réglage d'angle peut être actionné manuellement et/ou par un entraînement.

14. Dispositif (6) selon l'une des revendications 1 à 13, **caractérisé en ce que** le dispositif (6) comprend un dispositif d'affichage sur lequel est affiché un changement ou une valeur de la distance entre le point haut (7, 8) et la surface (1) et/ou un changement ou une valeur de l'angle aigu alpha, bêta ou la valeur numérique de l'angle aigu alpha, bêta et/ou la distance de position de marquage (14).

15. Dispositif (6) selon l'une des revendications 1 à 14, **caractérisé en ce que** la durée d'éclairage d'au moins une source lumineuse (15) peut être contrôlée par une unité de contrôle du temps.

16. Dispositif (6) selon l'une des revendications 1 à 15, **caractérisé en ce que** la ou les sources lumineuses (3, 4), éventuellement les éléments de guidage du faisceau lumineux et éventuellement les éléments de focalisation du faisceau lumineux sont disposés sur une plaque porteuse (15), laquelle plaque porteuse (15) est montée de manière rotative autour d'au moins un axe horizontal (16') de sorte que les points hauts (7, 8) et les positions de marquage (9, 10) soient disposés dans un plan (18) s'étendant verticalement à un angle de 90 degrés par rapport à une direction de jeu (17).

17. Dispositif (6) selon les revendications 1 à 16, **caractérisé en ce que** la ou les sources lumineuses (2, 3) sont refroidies par un milieu de refroidissement.

18. Dispositif (6) selon les revendications 1 à 17, **caractérisé en ce qu'**il comporte au moins une source lumineuse (2, 3) et, éventuellement, des éléments de guidage du faisceau lumineux et, éventuellement, les éléments de focalisation du faisceau lumineux sont disposés dans un boîtier, lequel boîtier comprend des ouvertures de sortie de lumière (11) réalisées dans un matériau transparent ou des cavités.

19. Dispositif (6) selon les revendications 1 à 18, **caractérisé en ce que** le dispositif (6) comprend au moins une source lumineuse (2, 3), qui émet de la lumière de différentes couleurs, entre lesquelles l'utilisateur peut choisir.
